# EUROPEAN PATENT APPLICATION

(11) **EP 4 815 180 A1**
(43) Date of publication of application: **30.09.2026**
(21) Application number: 24907675.3
(22) Date of filing: 28.08.2024
(51) Int. Cl.: H01M 50/567, H01M 50/552, H01M 50/562, H01M 50/103

(54) **BATTERY CELL AND MANUFACTURING METHOD THEREFOR**

(30) Priority: 19.12.2023 KR 20230186095
(71) Applicant: SK On Co., Ltd., Seoul 03161 (KR)
(72) Inventor: CHEONG, Hoemin, Daejeon 34124 (KR); KWAK, Seung Ho, Daejeon 34124 (KR); JU, Seung Hoon, Daejeon 34124 (KR); PAK, Byeong Jun, Daejeon 34124 (KR); LEE, Dong Hyee, Daejeon 34124 (KR)
(74) Representative: Prüfer & Partner mbB Patentanwälte · Rechtsanwälte
(86) International application number: PCT/KR2024/012860
(87) International publication number: WO 2025/135389

(57) **Abstract**

The present disclosure may include: a body case including an opening on one surface and accommodating an electrode assembly therein through the opening; a cover case bonded to the body case and covering the opening; a through-hole penetrating through the cover case; a terminal plate including a communication hole in communication with the through-hole, located outwardly of the cover case, and formed of a first metal material; a connection member inserted through the through-hole and the communication hole to bond the cover case and the terminal plate, electrically connected with the electrode assembly, and formed of a second metal material; and a bonding portion melted at a predetermined temperature to connect the connection member and the terminal plate along the periphery of the communication hole.

## Description

### [Field]

The present disclosure relates to a battery cell and a manufacturing method therefor. More particularly, the present disclosure relates to a battery cell that improves a bonding force of a body case and a terminal unit and minimizes a contact resistance, and a manufacturing method therefor.

### [Background technology]

A battery cell is a basic unit of forming a secondary battery, and a plurality of battery cells may be assembled to form a battery module or a battery pack. A secondary battery is a battery that repeatedly performs charging and discharging, where a small capacity secondary battery may be used in portable electronic devices such as mobile phones and laptop computers, and a large capacity secondary battery may be used for a power source of an automobile.

Battery cells may be classified into prismatic, pouch-like, or cylindrical form depending on a shape, but commonly include an electrode assembly having a positive electrode, negative electrode, and separator stacked or jelly rolled.

On at least one surface of the battery cell, a terminal unit in electrical connection with the electrode assembly is arranged, wherein the terminal unit is capable of supplying current generated in the electrode assembly to an external source via a connection member that penetrate through a terminal plate.

The terminal plate and the connection member are made of dissimilar metals and are usually bonded by caulking, but the bonding by caulking bears problems of weak bonding force and gap formation to increase electrical resistance. Welding between dissimilar metals has the problem of poor weldability to lead to weak bonding strength as well as generation of intermetallic compounds (IMCs).

### [Detailed Description of the Invention]

### [Technical Problem]

According to an aspect of the present disclosure, an object of the present disclosure aims to improve the bonding force of a terminal unit through a bonding portion.

According to another aspect of the present disclosure, an object of the present disclosure aims to minimize the spacing between a terminal plate and a connection member in the terminal unit.

According to another aspect of the present disclosure, an object of the present disclosure aims to increase a contact surface of the terminal plate and the connection member in the terminal unit.

According to another aspect of the present disclosure, an object of the present disclosure aims to prevent disengagement of the connection member from the terminal unit by means of a bonding portion.

According to another aspect of the present disclosure, an object of the present disclosure aims to weld the terminal plate and the connection member in the terminal unit to improve the bonding force.

According to another aspect of the present disclosure, an object of the present disclosure aims to minimize damage to the connection member during welding of the terminal plate and the connection member in the terminal unit.

According to another aspect of the present disclosure, an object of the present disclosure aims to minimize melting of the connection member during welding of the terminal plate and the connection member in the terminal unit.

According to another aspect of the present disclosure, an object of the present disclosure aims to suppress formation of an intermetallic compound (IMC) in the bonding of the terminal plate and the connection member.

According to another aspect of the present disclosure, an object of the present disclosure aims to extend the lifetime of a battery cell.

According to another aspect of the disclosure, an object of the present disclosure aims to increase the stability of the battery cell.

A battery assembly and a control method thereof in the present disclosure may be widely applied in the field of electric vehicles, battery charging stations, and other green technologies, such as photovoltaic and wind power generation that utilize batteries. In addition, the battery assembly and the control method thereof in the present disclosure may be used in eco-friendly electric vehicles, hybrid vehicles, and the like to prevent climate change by suppressing air pollution and greenhouse gas emissions.

### [Technical solutions]

A battery assembly according to an embodiment of the present disclosure may include: a body case including an opening on one surface and accommodating an electrode assembly therein through the opening; a cover case bonded to the body case and covering the opening; a through-hole penetrating through the cover case; a terminal plate including a communication hole in communication with the through-hole, located outwardly of the cover case, and formed of a first metal material; a connection member inserted through the through-hole and the communication hole to bond the cover case and the terminal plate, electrically connected with the electrode assembly, and formed of a second metal material; and a bonding portion melted at a predetermined temperature to connect the connection member and the terminal plate along the periphery of the communication hole.

The connection member may penetrate the through-hole such that at least a portion thereof may be exposed to the outside through the communication hole.

A melting point of the second metal material may be greater than a melting point of the first metal material.

The predetermined temperature may be set to be greater than or equal to the melting point of the first metal material and less than the melting point of the second metal material.

The connection member may include: a cylindrical body inserted into the communication hole and the through-hole; a head exposed outwardly of the communication hole; and a protrusion extending in a radial direction of the body between the body and the head and formed along a circumferential direction of the body.

A diameter of the protrusion may be greater than a diameter of the through-hole.

The bonding portion may be formed by melting one region of the terminal plate adjacent to the periphery of the communication hole at the predetermined temperature.

The terminal plate may include a projection formed by protruding outwardly, and the bonding portion may be formed by melting the projection at the predetermined temperature.

The bonding portion may be formed by melting the melting member at the predetermined temperature.

The melting member may be ring-shaped.

The connection member may include a pinhole that penetrates through the connection member along a direction from the cover case toward the body case.

The battery assembly may further include a pin member inserted into the pinhole.

The battery assembly may further include a support member located between the cover case and the terminal plate to support the terminal plate and formed of an insulating material.

The bonding portion may be formed of a single metal material, including the first metal material different from the second metal material.

The bonding portion may have at least a portion thereof covering some regions of the connection member adjacent to the periphery of the communication hole.

The first metal material may include aluminum, and the second metal material may include copper.

The connection member may be a rivet.

A method of manufacturing a battery cell which includes a body case including an opening on one surface and accommodating an electrode assembly therein through the opening; a cover case bonded to the body case and covering the opening; a through-hole penetrating through the cover case; a terminal plate including a communication hole in communication with the through-hole, located outwardly of the cover case, and formed of a first metal material; and a connection member inserted through the through-hole and the communication hole to bond the cover case and the terminal plate, electrically connected with the electrode assembly, and formed of a second metal material, according to an embodiment of the present disclosure, may include: engaging the connection member to the through-hole and the communication hole; melting the melting member or a portion of the terminal plate at a predetermined temperature; and forming a bonding portion that bonds the terminal plate and the connection member by melting the melting member or the portion of the terminal plate.

In the forming the bonding portion, a projection formed by protruding outwardly from the terminal plate may be melted to form the bonding portion.

In the forming the bonding portion, a portion disposed on the periphery of the communication hole in the terminal plate is melted to form the bonding portion.

In the forming the bonding portion, a portion of the ring-shaped melting member may be melted to form the bonding portion.

The melting may include heating the melting member or a portion of the terminal plate to a predetermined temperature using a heater.

The melting the melting member at a predetermined temperature may further include heating, by the heater, the melting member or a portion of the terminal plate to a predetermined temperature, the temperature being greater than or equal to the melting point of the first metal material and less than or equal to the melting point of the second metal material.

### [Effect]

According to an embodiment of the present disclosure, it is possible to improve a bonding force of a terminal unit through a bonding portion.

According to another embodiment of the present disclosure, it is possible to minimize the spacing between a terminal plate and a connection member in the terminal unit.

According to another embodiment of the present disclosure, it is possible to increase a contact surface of the terminal plate and the connection member in the terminal unit.

According to another embodiment of the present disclosure, it is possible to prevent disengagement of the connection member from the terminal unit by means of a bonding portion.

According to another embodiment of the present disclosure, it is possible to weld the terminal plate and the connection member in the terminal unit to improve the bonding force.

According to another embodiment of the present disclosure, it is possible to minimize damage to the connection member during welding of the terminal plate and the connection member in the terminal unit.

According to another embodiment of the present disclosure, it is possible to minimize the melting of the connection member during welding of the terminal plate and the connection member in the terminal unit.

According to another embodiment of the present disclosure, it is possible to suppress the formation of an intermetallic compound (IMC) in the bonding of the terminal plate and the connection member.

According to another embodiment of the present disclosure, it is possible to extend the lifetime of a battery cell.

According to another embodiment of the present disclosure, it is possible to increase the stability of a battery cell.

### [Description of the drawing]

FIG. 1 illustrates a view in which a body case and a cover case are separated, according to an embodiment of the present disclosure.
FIG. 2 illustrates a view in which a body case and a cover case are bonded, according to an embodiment of the present disclosure.
FIG. 3 illustrates a view in which a battery cell is separated, according to an embodiment of the present disclosure.
FIG. 4 illustrates a portion of a cover case according to an embodiment of the present disclosure.
FIG. 5 illustrates a view in which a cover case is separated, according to an embodiment of the present disclosure.
FIG. 6 is a conceptual view in which a projection on a terminal plate is heated, according to an embodiment of the present disclosure.
FIG. 7 is a conceptual view in which a melting member on a terminal plate is heated, according to an embodiment of the present disclosure.
FIG. 8 is a conceptual view in which a terminal plate is heated, according to an embodiment of the present disclosure.
FIG. 9 is a diagram illustrating a bonding portion formed on a terminal plate according to an embodiment of the present disclosure.
FIG. 10 is an enlarged view of a bonding portion formed on a terminal plate according to an embodiment of the present disclosure.
FIG. 11 is a diagram illustrating a bonding portion formed through one region of a terminal plate, according to an embodiment of the present disclosure.
FIG. 12 is an illustration of a pin member according to an embodiment of the present disclosure.
FIG. 13 illustrates a cross-sectional view of a pin member bonded to a cover case, according to an embodiment of the present disclosure.
FIG. 14 illustrates a view in which a body case and a cover case are separated, according to another embodiment of the present disclosure.
FIG. 15 illustrates a view in which a body case and a cover case are bonded, according to another embodiment of the present disclosure.
FIG. 16 illustrates a view in which a cover case is separated, according to another embodiment of the present disclosure.
FIG. 17 illustrates a view in which a cover case is bonded with a collector, according to another embodiment of the present disclosure.
FIG. 18 is a cross-sectional view in which a cover case and a collector are bonded, according to another embodiment of the present disclosure.
FIG. 19 is a flow chart illustrating a method of manufacturing a battery cell according to another embodiment of the present disclosure.

### [Embodiments]

Hereinafter, the present disclosure will be described in detail with reference to the accompanying drawings. However, these are illustrative only and do not limit the present disclosure to the specific embodiment illustrated.

Certain terms used herein are for convenience of description only and are not intended to be limiting to the exemplified embodiments.

For example, expressions such as "identical" and "identical to" refer not only to a state of being strictly identical, but also a state where tolerances or differences exist in the degree to which the same function is obtained.

For example, expressions such as "in a direction," "along a direction," "side-by-side," "perpendicular," "centered," "concentric," or "coaxial" that refer to a relative or absolute placement do not only strictly refer to such placement, but also to a state of relative displacement by a tolerance, or by an angle or distance that the same function is obtained.

To describe the present disclosure, the following description will be set forth based on a spatial Cartesian coordinate system with the X, Y, and Z axes that are orthogonal to each other. Each axial direction (X-axis direction, Y-axis direction, Z-axis direction) means both directions in which each axis extends.

References herein to X, Y, and Z directions are for the clarity of the present disclosure, although each direction may be defined differently depending on where the reference is placed.

The use of terms such as "first, second, third," and the like that precede components referred herein is intended to avoid confusion as to the components to which they refer and is not intended to indicate any order, importance, or hierarchical relationship among the components. For example, it is possible to implement an invention that includes only the second component without the first component.

As used herein, the singular expression includes the plural unless the context clearly indicates otherwise.

In the following, the present disclosure will be described in detail. However, this is by way of example only and the present disclosure is not limited to the specific embodiments illustrated.

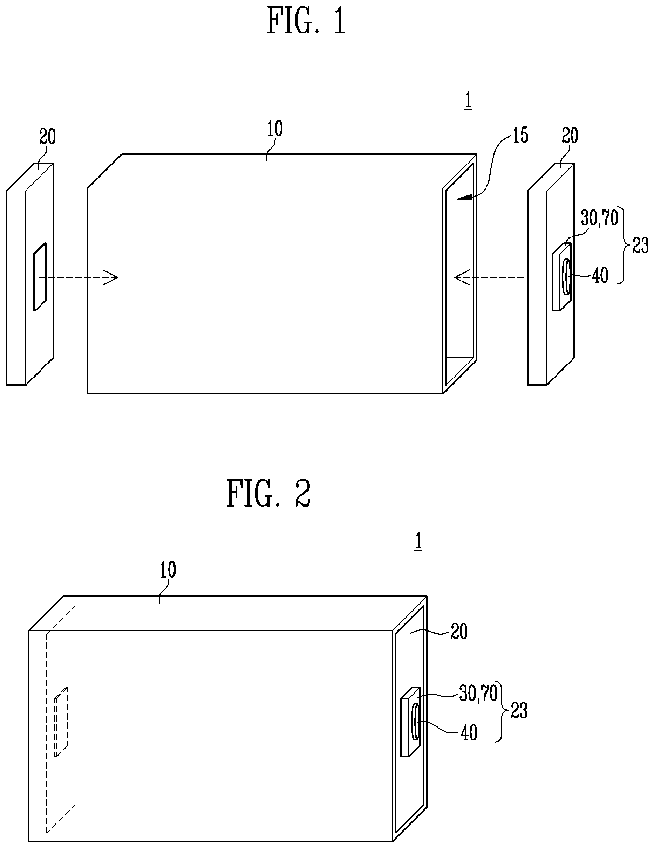

FIG. 1 illustrates a view in which a body case 10 and a cover case 20 are separated, according to an embodiment of the present disclosure.

FIG. 1 illustrates the body case 10 and cover case 20, which form the external appearance of the present disclosure, being manufactured in a separated state.

The battery cell 1 described herein refers to a secondary battery that may be used repeatedly by charging and discharging electrical energy. For example, it may be, but is not limited to, a lithium secondary battery.

The battery cell 1 may be categorized as a pouch type secondary battery, a prismatic secondary battery, or a cylindrical secondary battery depending on its shape. Referring to FIG. 1, in the present disclosure, a prismatic secondary battery is illustrated for convenience of description, but is not limited thereto.

The body case 10 may include an opening 15 on one surface and accommodate an electrode assembly 60 therein through the opening 15. The body case 10 may have the opening 15 formed on at least one surface, such that the opening 15 may be formed on the first surface and a second surface facing the first surface.

When the openings 15 are formed on the first surface and the second surface facing each other in the body case 10, the body case 10 may be provided in a penetrated form, as shown in FIG. 1.

The cover case 20 may be bonded to the body case 10 to close the opening 15. The cover case 20 may correspond to the shape of the opening 15 formed in the body case 10, such that it may be provided in the opening 15 to be bonded to the body case 10.

The cover case 20 may include a terminal unit 23 that is electrically connected to the electrode assembly 60, and by the terminal unit 23, the electrode assembly 60 accommodated in the body case 10 and the exterior of the body case 10 may be electrically connected.

The terminal unit 23 may be formed to be in electrical connection with the electrode assembly 60 in the cover case 20 to provide a path for electrical connection to the external source. The terminal unit 23 may be formed to penetrate the cover case 20 to be in electrical connection with the electrode assembly 60 accommodated inside the body case 10.

The terminal unit 23 may protrude from the cover case 20 and include a terminal plate 30, a connection member 40, and a support member 70. The terminal plate 30 may form an upper surface of the terminal unit 23 to serve to finish the terminal unit 23. The terminal plate 30 may be formed of a first metal material having an electrical conductivity, and may be electrically connected to the connection member 40.

The connection member 40 may be exposed or protrude from the terminal unit 23 through the cover case 20, the support member 70, and the terminal plate 30. The connection member 40 may be formed of a first metal material that is an electrically conductive material for electrical connection with the electrode assembly 60 and the terminal plate 30 accommodated within the body case 10.

For example, the connection member 40 may be formed of metal, and among metals, copper may be employed that has a low electrical resistance with a favorable electrical conductivity. The connection member 40 may include a rivet.

The support member 70 may be disposed between the terminal plate 30 and the cover case 20, as the upper surface is formed to allow a lower portion of the terminal plate 30 to be placed and the lower surface to be placed in the cover case 20.

The support member 70 is formed with a cross-section that is wider than the terminal plate 30 to accommodate the terminal plate 30 on its upper surface, and is formed with a cross-section that is smaller than the cover case 20 to be accommodated in the upper surface of the cover case 20.

The support member 70 may be formed of a material with a low electrical conductivity to electrically insulate the connection member 40 and the terminal plate 30. The support member 70 may support the lower surface of the terminal plate 30 to limit horizontal movement of the terminal plate 30.

FIG. 2 illustrates a view in which a body case 10 and a cover case 20 are bonded, according to an embodiment of the present disclosure.

FIG. 2 illustrates a view in which the body case 10 and the cover case 20 are bonded, wherein the cover case 20 may be bonded to the opening 15 of the body case 10 such that the interior of the body case 10 may be closed.

The body case 10 may have an opening 15 formed on a first surface or on a second surface facing the first surface, and the cover case 20 may be bonded to the opening 15, such that the body case 10 may be bonded with one or more cover cases 20.

The cover case 20 may have a terminal unit 23 that is electrically connected with the electrode assembly 60, and the terminal unit 23 may be electrically connected with the electrode assembly 60 such that the migration path of the current in the battery cell 1 may vary depending on the placement of the terminal unit 23.

Referring to FIG. 2, an opening 15 may be formed in a first surface of the body case 10 or in a second surface facing the first surface, such that two cover cases 20 may be bonded to the body case 10. The cover case 20 may be bonded with the opening 15 on a first surface of the body case 10 or on a second surface facing the first surface to isolate an electrode assembly 60 that may be accommodated inside the body case 10 from the outside.

The body case 10 may be formed in a hexahedron having two surfaces facing each other opened, but is not limited thereto, and may include a form in which at least one surface is opened and an accommodable space is formed therein such that the electrode assembly 60 is accommodated therein through the first surface.

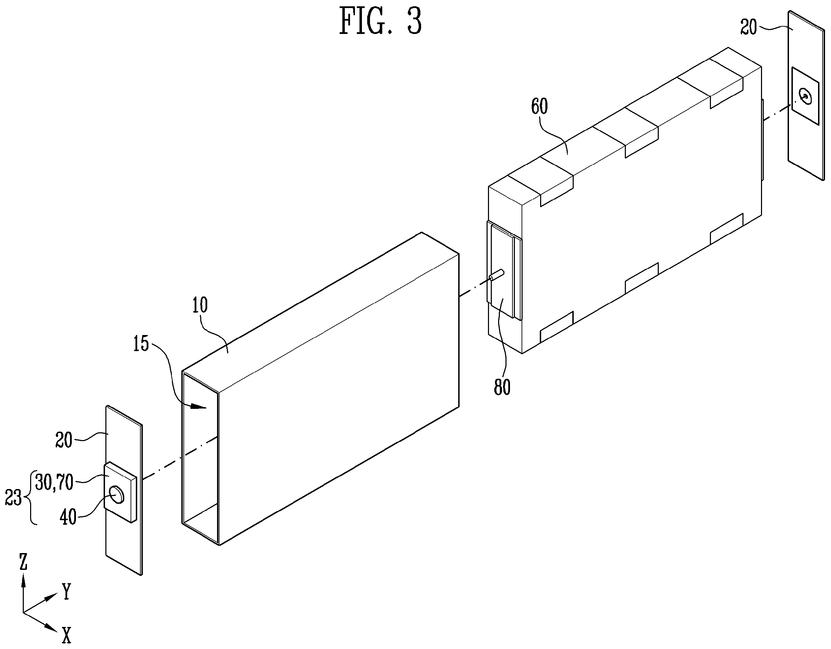

FIG. 3 illustrates a view in which a battery cell 1 is separated, according to an embodiment of the present disclosure.

The battery cell 1 according to an embodiment of the present disclosure may include an electrode assembly 60, a body case 10 that accommodates the electrode assembly 60 therein, and a cover case 20 that closes an opening 15 of the body case 10 to limit the position of the electrode assembly 60.

The electrode assembly 60 may be formed by stacking a positive electrode, a negative electrode, and a separator.

In FIG. 3, the battery cell 1 is represented as a prismatic battery and the electrode assembly 60 as a stack type that is inserted into the prismatic battery, but the type of battery cell 1 and electrode assembly 60 is not limited.

The body case 10 may be manufactured via a press process. The body case 10 may be formed to enclose the electrode assembly 60 to protect it from external impact, and the method of manufacturing the body case 10 and cover case 20 is not particularly limited.

The body case 10 may include an opening 15 having at least one surface opened, and in FIG. 3, the openings 15 may be formed on two facing surfaces of the body case 10. Both surfaces facing each other in the body case 10 may be opened, respectively.

Referring to FIG. 3, the two surfaces facing each other of the body case 10 may be formed with openings 15 that are opened to the Y direction. By the opening 15, the electrode assembly 60 and electrolyte may be accommodated inside the body case 10.

For example, the body case 10 may have a hexahedral shape and have openings 15 formed along the Y-direction such that both surfaces facing each other are opened. The cover case 20 may be bonded to each of the openings 15 of the body case 10, thereby closing an accommodating space of the body case 10.

The electrode assembly 60 may be accommodated inside the body case 10 through an opening 15 of the body case 10, and the cover case 20 may close the opening 15 of the body case 10 in which the electrode assembly 60 is accommodated. The body case 10 may be bonded with the cover case 20 to be sealed, and the electrode assembly 60 may be protected from the outside.

The cover case 20 may include a terminal unit 23 that electrically connects the electrode assembly 60 to the outside. The terminal unit 23 may be connected to the electrode assembly 60 and may be connected to the cover case 20 to form a positive electrode or a negative electrode.

The terminal unit 23 may protrude from the cover case 20 and be connected to the electrode assembly 60 accommodated inside the body case 10 through the cover case 20. In other words, the terminal unit 23 may serve as a path that electrically connects the electrode assembly 60 with the outside to supply electrical energy generated by the electrode assembly 60 or to store electrical energy in the electrode assembly 60.

A plurality of terminal units 23 may be provided in the battery cell 1, each serving as a positive electrode and a negative electrode. Furthermore, the positive electrode and the negative electrode formed by the terminal unit 23 may be formed in a plurality within battery cells 1.

In FIG. 3, the body case 10 is formed with openings 15 on both surfaces that face each other and the cover case 20 is bonded to the body case 10 at the openings 15, such that a plurality of terminal units 23 may be disposed on both surfaces facing each other, respectively

A pin member 80 may be bonded to the electrode assembly 60, and pins protruding in one direction may be disposed. The pin member 80 may be inserted into the pinhole 45.

The pin member 80 may be in the form of a plate having a predetermined thickness, with a pin protruding from the center, and may be bonded with the terminal unit 23. The pin member 80 may be formed of a material with a high electrical conductivity to be electrically connected with the electrode assembly 60.

The pin member 80 may electrically connect the electrode assembly 60 and the terminal unit 23.

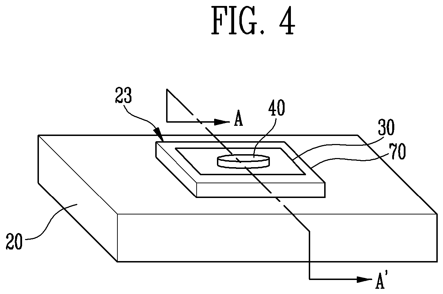

FIG. 4 illustrates a portion of a cover case 20 according to an embodiment of the present disclosure.

The terminal unit 23 may penetrate the cover case 20 and protrude outwardly from the upper surface of the cover case 20. The terminal plate 30, connection member 40, and support member 70 included in the terminal unit 23 may be stacked sequentially in the cover case 20.

The terminal plate 30 may be located outwardly of the cover case 20 and formed of a first metal material. The terminal plate 30 may be formed to be placed on the upper surface of the support member 70 in the form of a square plate.

The terminal plate 30 may include a communication hole 35 opened for a connection member 40 to penetrate at its center. The communication hole 35 may communicate with the through-hole 25 formed in the cover case 20 to serve as a path that connects the inside and outside of the cover case 20.

A connection member 40 may be inserted through the through-hole 25 and the communication hole 35 to bond the cover case 20 and the terminal plate 30. The connection member 40 may penetrate the cover case 20 and the terminal plate 30, and may protrude from the terminal plate 30.

In one example, the connection member 40 may be a rivet.

The connection member 40 may be electrically connected to the electrode assembly 60 and formed of a second metal material having an electrical conductivity. The connection member 40 may be formed of a second metal material that is different from the first metal material of the terminal plate 30.

For example, the connection member 40 may be formed of copper, and the terminal plate 30 may be formed of aluminum.

The support member 70 may be disposed between the terminal plate 30 and the cover case 20 to support the terminal plate 30. The support member 70 may be formed with a larger area than the terminal plate 30, and the terminal plate 30 may be disposed on the support member 70.

The support member 70 may be formed of a material having a low electrical conductivity. For example, it may be formed of a plastic material. The support member 70 may be formed of an electrically insulating material such that it is not electrically connected to the terminal plate 30 and the connection member 40.

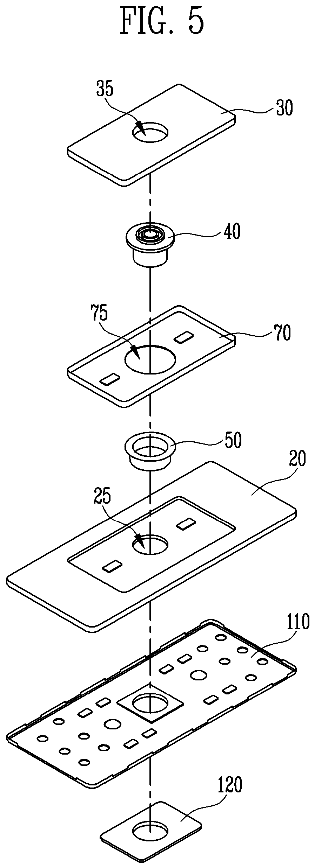

FIG. 5 illustrates a view in which a cover case 20 is separated, according to an embodiment of the present disclosure.

Referring to FIG. 5, sequentially from top, a terminal plate 30, a connection member 40, a support member 70, a sealing gasket 50, a cover case 20, and an insulating plate 110 may be included. With respect to the cover case 20, the terminal plate 30, the connection member 40, the support member 70, and the sealing gasket 50 may be bonded onto the upper surface, and the insulating plate 110 may be bonded onto the lower surface.

The terminal plate 30 may be formed of a first metal material and have the shape of a square plate. The terminal plate 30 may include a communication hole 35 at its center, and the communication hole 35 may communicate with the through-hole 25 that is formed in the cover case 20.

In other words, when the terminal plate 30 is assembled to the cover case 20, the communication hole 35 and the through-hole 25 may at least partially overlap with each other.

The connection member 40 may be formed of a second metal material and have a columnar shape. The connection member 40 may include protrusions 43 having different cross-sectional sizes at some heights, such that the cross-sectional size varies with height.

The connection member 40 may be disposed to penetrate through the through-hole 25 of the cover case 20 and the communication hole 35 of the terminal plate 30 to connect the inside and outside of the cover case 20.

The protrusion 43 formed on the connection member 40 may have a larger cross-sectional area or a larger diameter than the communication hole 35 and the through-hole 25. The diameter of the protrusion 43 may be greater than that of the through-hole 25 and the communication hole 35.

In the case of the connection member 40, with respect to the protrusion 43, the terminal plate 30 may be disposed on the upper portion and the cover case 20 on the lower portion. Specifically, in the connection member 40, an upper portion of the protrusion 43 may be formed to protrude from the communication hole 35, and a lower portion of the protrusion 43 may penetrate the support member 70, the sealing gasket 50, and the cover case 20.

The support member 70 may have the periphery that protrudes from the inner surface to accommodate the terminal plate 30. The support member 70 may have a relatively depressed inner surface to allow the terminal plate 30 to be bonded to the inner surface of the support member 70.

A center of the support member 70 may be opened to be in communication with the communication hole 35 and the through-hole 25 such that the connection member 40 may penetrate the center of the support member 70. The support member 70 may be formed of a material having a low electrical conductivity.

The support member 70 may include a support hole 75 that penetrates through the support member 70 and is in communication with the communication hole 35 and the through-hole 25. The support hole 75 may be formed with an area greater than the communication hole 35 and the through-hole 25.

The sealing gasket 50 may be formed in a columnar shape with the center opened to accommodate the connection member 40 in the center. The sealing gasket 50 may serve to seal current migrating through the connection member 40 from escaping to the outside.

The sealing gasket 50 may be formed of a material with a low electrical conductivity. For example, it may be formed of a plastic material.

The cover case 20 may be bonded to the opening 15 of the body case 10 to close the opening 15.

In FIG. 5, the length of the cover case 20 is depicted to be short, but it may be formed in a size corresponding to the opening 15 of the body case 10. The cover case 20 may include a through-hole 25 and a depressed inner surface.

On the depressed inner surface of the cover case 20, a support member 70 may be placed to limit horizontal movement of the support member 70. The through-hole 25 of the cover case 20 may be in communication with the communication hole 35 of the terminal plate 30, and the connection member 40 may penetrate through.

An insulating plate 110 may be provided on the lower surface of the cover case 20 and bonded to the cover case 20. The insulating plate 110 may be formed with a cross-section corresponding to or larger than the cover case 20 and bonded in a way to surround the cover case 20.

The insulating plate 110 may be formed of a material with a low electrical conductivity. For example, it may be formed of a plastic material. The insulating plate 110 may have a center opened such that the connection member 40 may be inserted.

The insulating plate 110 may prevent current of the electrode assembly 60 from being transmitted through the cover case 20, and may allow current from the electrode assembly 60 to be transmitted only through the connection member 40.

The terminal plate 120 may be disposed on the lower surface of the insulating plate 110. The terminal plate 120 may be formed in the square shape with the center opened. The opened center of the terminal plate 120 may correspond to the opened center of the insulating plate 110, such that the connection member 40 may be inserted.

The terminal plate 120 may be formed of a material with an electrical conductivity to be electrically connected with the connection member 40 inserted into the center. Specifically, the terminal plate 120 may be formed of a material with a high electrical conductivity to serve as a collector 130.

The terminal plate 120 may be electrically connected to the electrode assembly to transmit current from the electrode assembly to the connection member 40. The terminal plate 120 may be formed of a conductor to accept current, while the insulating plate 110 may be formed of a non-conductor or low-conductivity material to block the migration of current.

The terminal plate 120 and insulating plate 110 may move current in the electrode assembly 60 through the connection member 40 inserted in the opened center. Current from the electrode assembly may pass through the terminal plate 120 and the connection member 40 and be transmitted to the terminal plate 30.

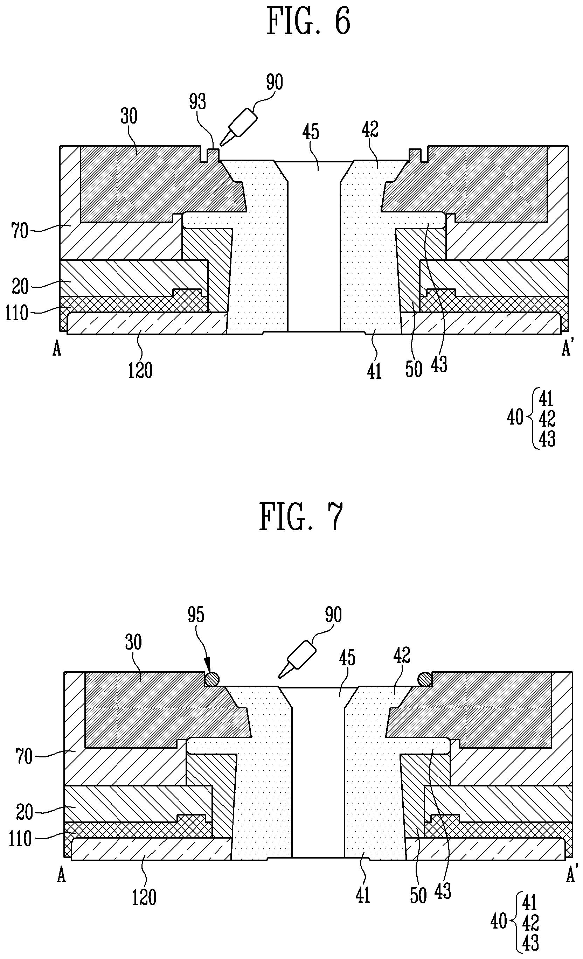

FIG. 6 is a conceptual view of a projection 93 on a terminal plate 30, according to an embodiment of the present disclosure.

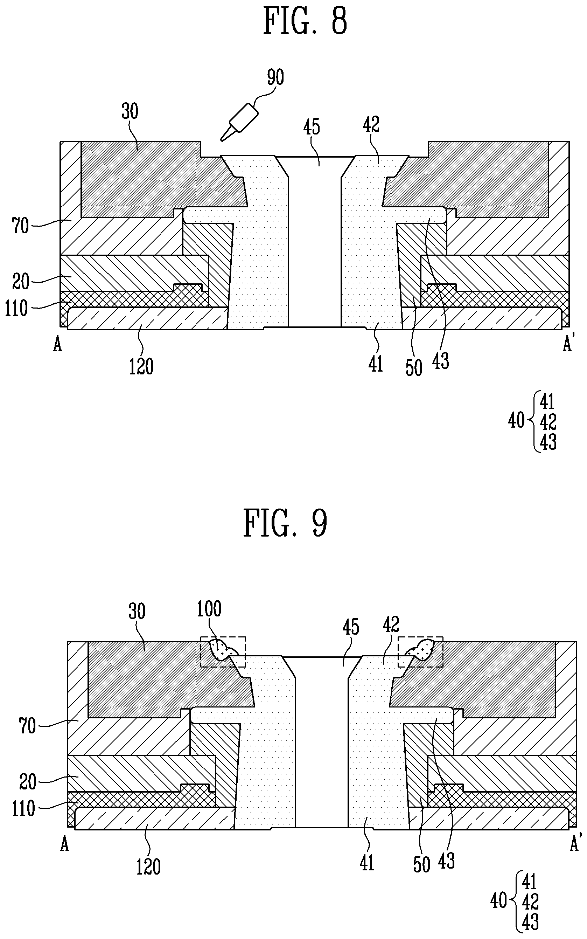

Referring to FIG. 6, the projection 93 may be heated by the heater 90 and melted at a predetermined temperature to form a bonding portion 100 (see FIG. 9). The bonding portion may be formed along the periphery of the communication hole 35 to bond the terminal plate 30 and the connection member 40.

The terminal plate 30 and the connection member 40 may be bonded in a vertical direction by caulking or welding. The terminal plate 30 may be bonded to the connection member 40 in a horizontal direction by welding to form a bonding portion.

The terminal plate 30 may be formed of a first metal material and the connection member 40 may be formed of a second metal material, such that the terminal plate 30 and the connection member 40 may be formed of different metals. When a gap is formed between the terminal plate 30 and the connection member 40, the resistance due to increased traveling path of the current increases, leading to deterioration in the performance of the battery cell 1.

The terminal plate 30 and the connection member 40 may be bonded such that there is minimal gap between the terminal plate 30 and the connection member 40 with maximum contact to prevent deterioration in the performance of the battery cell 1.

The terminal plate 30 and the connection member 40 may be bonded by caulking, but caulking is a mechanical joining that may result in a poor bonding force, and gaps may be additionally formed during the caulking process.

The battery cell 1 according to an embodiment of the present disclosure may be welded separately from caulking, creating a bonding portion to maximize contact between the terminal plate 30 and the connection member 40.

For example, the caulking and welding may be performed independently, such that when the caulking proceeds to bring the terminal plate 30 and the connection member 40 into contact, the welding may proceed around the periphery of the communication hole 35 to create a bonding portion.

The bonding portion may be formed between the terminal plate 30 and the connection member 40, which are dissimilar metals. Specifically, the bonding portion may be formed between the projection 93 disposed around the periphery of the communication hole 35 and the connection member 40.

The projection 93 may be formed of the same first metal material as the terminal plate 30, which may be a metal different from the second metal material of the connection member 40. The projection 93 may correspond to a portion of the terminal plate 30 and may be formed to protrude from the terminal plate 30.

For example, the first metal material may include aluminum and the second metal material may include copper, such that the melting point of the second metal material may be greater than the melting point of the first metal material. The melting point refers to the melting temperature, which may vary depending on the metal.

The projection 93 may be melted at a predetermined temperature to create a bonding portion. The preset temperature may be set to be greater than or equal to the melting point of the first metal material and less than the melting point of the second metal material.

The projection 93 may be melted at a temperature greater than or equal to the melting point of the first metal material and less than the melting point of the second metal material to form a bonding portion.

When the heater 90 applies a predetermined temperature to the protrusions 93, the first metal material will be melted at the predetermined temperature and the second metal material will not be melted at the predetermined temperature. As the heater 90 applies heat to the projection 93 protruding from the terminal plate 30, damage to the connection member 40 by the heat may be minimized.

At a predetermined temperature, the projection 93 may be melted, but the connection member 40 may not. In FIG. 6, the projection 93 melted by the heater 90 may correspond to a portion of the terminal plate 30.

The projection 93 disposed on the periphery of the communication hole 35 may be melted by the heater 90 to form a bonding portion between the terminal plate 30 and the connection member 40. In the molten state, the projection 93 may fill the gap between the terminal plate 30 and the connection member 40 and form a bonding portion 100 on the periphery of the communication hole 35.

The bonding portion may be formed on the periphery of the communication hole 35 by projection 93 or the first metal material being melted, and the bonding portion may be formed of the first metal material and made of a single type of metal. (See FIG. 9)

Thus, the bonding portion does not include a second metal material and thus may not correspond to an intermetallic compound (IMC).

The welding to form the bonding portion 100 may be a combination of bridging and brazing welding methods.

Bridging is a method in which gaps in the base materials to be joined are filled with an external material. Brazing is a method in which a filler metal is melted without melting the base material to fill the gap in the base material with the molten filler metal.

The welding to form the bonding portion 100 is a method in which the filler metal is melted without melting the base material, and the molten filler metal penetrates into the gap of the base material by capillary phenomenon and is joined through solidification.

Specifically, the connection member 40 corresponding to the base material may not be melted by the heater 90, and the projection 93 corresponding to the filler metal may be melted by the heater 90. The melted projection 93 may flow into the gap formed between the connection member 40 and the terminal plate 30 and solidify to form the bonding portion 100.

The bonding portion 100 may be formed on some regions of the connection member 40 adjacent to the communication hole 35, filling the gap. The bonding portion 100 formed at least in the gap may connect the connection member 40 and the terminal plate 30, preventing an increase in resistance due to the gap and increasing the bonding force of the two members.

The connection member 40 may include a cylindrical body 41 inserted into the communication hole 35 and the through-hole 25, a head 42 exposed outwardly of the communication hole 35, and a protrusion 43 extending radially from the body 41 between the body 41 and the head 42 and formed along a circumferential direction of the body 41. Preferably, the connection member 40 may be a rivet.

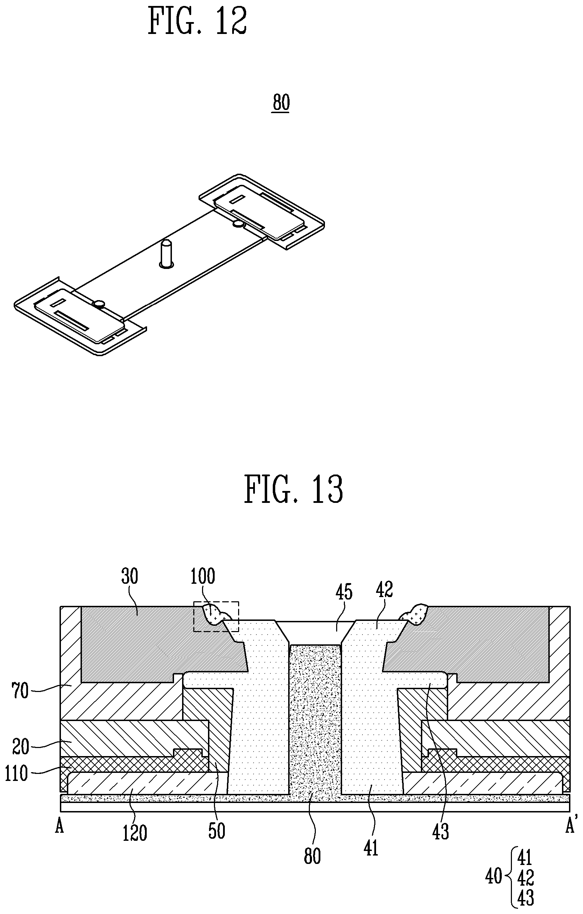

The connection member 40 may include a pinhole 45 that penetrates through the cover case 20 in a direction toward the body case 10. The pinhole 45 may be bonded with a pin member 80 (see FIG. 13) to support the connection member 40. The pinhole 45 may penetrate an inner surface of the connection member 40 to connect the inside and outside of the cover case 20.

The connection member 40 may include pinholes 45 that penetrate the connection member 40 in the same direction as the direction from the cover case 20 toward the body case 10.

FIG. 7 is a conceptual view in which a melting member 95 on a terminal plate 30 is heated, according to an embodiment of the present disclosure.

Referring to FIG. 7, the melting member 95 is heated via the heater 90 and may be melted at a preset temperature to form a bonding portion 100 (see FIG. 9). The bonding portion may be formed along the periphery of the communication hole 35 to bond the terminal plate 30 and the connection member 40.

In FIG. 7, the melting member 95 may be formed in a ring shape with a center opened. The melting member 95 may include a center larger than the periphery of the communication hole 35, and may be spaced apart from the connection member 40 on the terminal plate 30.

The melting member 95 may be disposed on the terminal plate 30 in a configuration that is formed separately from the terminal plate 30. The melting member 95 may be disposed on the terminal plate 30 after the terminal plate 30 and the connection member 40 are physically bonded.

The melting member 95 may be heated by the heater 90 to be melted, and the melted melting member 95 may connect the terminal plate 30 and the connection member 40. Preferably, the melted melting member 95 may fill the gap between the terminal plate 30 and the connection member 40 to form a bonding portion.

The heater 90 applies heat to the melting member 95 spaced apart from the connection member 40, thereby minimizing damage to the connection member 40 by heat.

The bonding portion may be formed by melting of the melting member 95 and made of a single type of metal. The bonding portion may be formed of the melting member 95 or a first metal material, which does not include a second metal material and thus does not include intermetallic compounds (IMCs) or minimizes the generation of intermetallic compounds (IMCs).

FIG. 8 is a conceptual view in which a terminal plate 30 is heated according to an embodiment of the present disclosure.

Referring to FIG. 8, a portion or a region of the terminal plate 30 may be heated by the heater 90 and melted at a predetermined temperature to form a bonding portion 100 (see FIG. 12). The bonding portion may be formed along the periphery of the communication hole 35 to bond the terminal plate 30 and the connection member 40.

The terminal plate 30 and the connection member 40 may be bonded via caulking, but caulking is a mechanical bond to result in a weak bond, and the caulking process may additionally form gaps.

The battery cell 1 according to an embodiment of the present disclosure may be welded separately from caulking to create a bonding portion 100, thereby maximizing the contact of the terminal plate 30 and the connection member 40.

Caulking corresponds to diffusion bonding, whereby members may be joined by utilizing the diffusion of metal atoms across the bonded surfaces of metal materials that are in close contact.

For example, the terminal unit 23 may correspond to the negative electrode, and bonding of the terminal plate 30 with a connection member 40 including a rivet may be required. The connection member 40 corresponding to the negative electrode may include copper, and the terminal plate 30 may include aluminum, which is a dissimilar metal to the connection member 40. The connection member 40 and the terminal plate 30 may be bonded via caulking to prevent the formation of intermetallic compounds (IMCs).

First, the terminal plate 30 may be placed on the upper side of the connection member 40 and then the terminal plate 30 may be pressed to be closer to the connection member 40. Then, the connection member 40 may be brought into contact with the terminal plate 30 to form a bonded surface. At the bonded surface, atoms of the connection member 40 and the terminal plate 30 may diffuse into each other and be bonded in a solid state.

After caulking, the connection member 40 that is connected with the terminal plate 30 may be bonded with a pin member 80 (see FIG. 13). Specifically, a pin protruding unidirectionally from the pin member may be inserted into a pinhole 45 of the connection member 40. To secure the pin member inserted in the pinhole 45, the inner surface of the pinhole 45 and the pin of the pin member may be bonded by welding.

During the welding process, the connection member 40 may be moved about the pin, such that the connection member 40 may be moved away from the terminal plate 30 on the periphery of the communication hole 35.

A gap may be formed between the connection member 40 and the terminal plate 30, or the gap may widen.

In FIG. 8, a portion of the terminal plate 30 may fill the gap by forming a bonding portion, and the gap may also be filled via the projection 93 and the melting member 95.

A portion of the terminal plate 30 may be melted at a predetermined temperature to create the bonding portion. The predetermined temperature may be set to be greater than or equal to the melting point of the first metal material and less than or equal to the melting point of the second metal material.

Thus, a portion of the terminal plate 30 may be melted at a temperature greater than or equal to the melting point of the first metal material and less than or equal to the melting point of the second metal material to form a bonding portion.

When the heater 90 applies the predetermined temperature to a portion of the terminal plate 30, the first metal material will be melted by the predetermined temperature and the second metal material will not be melted by the predetermined temperature.

Thus, at the predetermined temperature, a portion of the terminal plate 30 may be melted, but the connection member 40 may not.

A portion of the terminal plate 30 disposed on the periphery of the communication hole 35 may be melted by the heater 90 to form a bonding portion between the terminal plate 30 and the connection member 40. The bonding portion may be formed on the periphery of the communication hole 35 by melting the terminal plate 30 or the first metal material, and the bonding portion 100 may be formed of the first metal material only. (See FIG. 12)

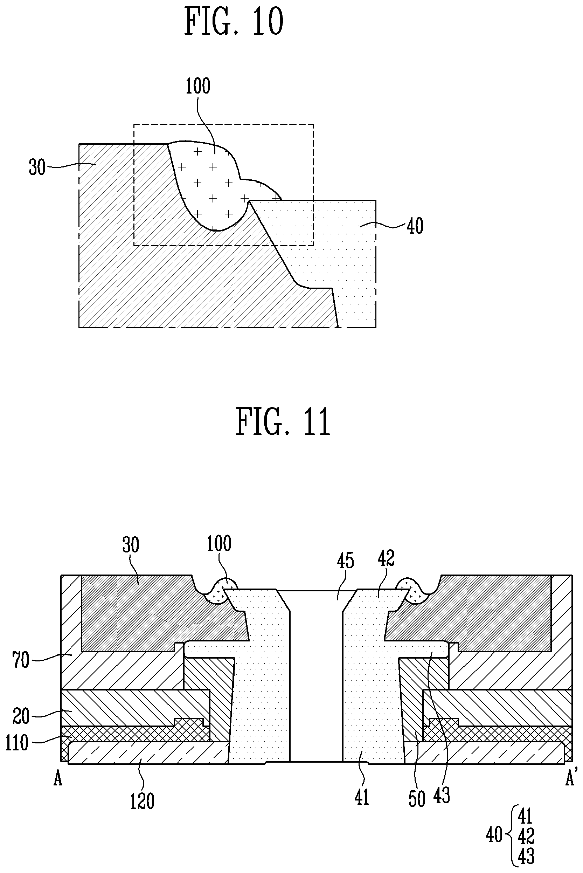

FIG. 9 is a diagram illustrating a bonding portion 100 formed on a terminal plate 30 according to an embodiment of the present disclosure, and FIG. 10 is an enlarged view of a bonding portion 100 formed on a terminal plate 300 according to an embodiment of the present disclosure.

The bonding portion 100 may be formed of the same material as the terminal plate 30, as it is formed by melting the melting member 95 or a portion of the terminal plate 30. The bonding portion 100 may be melted by heating of the heater 90 and then formed by coupling with the connection member 40 on the periphery of the communication hole 35.

As the second metal material forming the connection member 40 does not melt at the predetermined temperature of the heater 90, the bonding portion 100 may not include the second metal material. The bonding portion 100 may not include a compound of dissimilar metals and may be formed of a single type of metal, either the melting member 95 or the first metal material.

The bonding portion 100 may be formed between the terminal plate 30 and the connection member 40 to fill the gap between the terminal plate 30 and the connection member 40. The bonding portion 100 formed of metal may fill the gap between the terminal plate 30 and the connection member 40, thereby preventing an increase in resistance due to the gap.

Referring to FIG. 10, the bonding portion 100 may be formed by melting a portion of the terminal plate 30 without including the connection member 40. The predetermined temperature may be set such that the bonding portion 100 may be formed by the heater 90, but the connection member 40 is not included as a part of the bonding portion 100.

The predetermined temperature applied by the heater 90 may be a temperature that is greater than the melting point of the terminal plate 30 and lower than the melting point of the connection member 40.

FIG. 11 is a diagram illustrating a bonding portion 30 formed through one region of a terminal plate 30, according to an embodiment of the present disclosure.

In FIG. 11, the shape of the bonding portion 100 may be different compared to those in FIGS. 9 and 10.

In FIGS. 9 and 10, at least a portion of the bonding portion 100 covers the upper surface of the connection member 40 and may be convex in a direction away from the connection member 40.

In FIG. 11, at least a portion of the bonding portion 100 may cover the connection member 40 and may be concave in a direction away from the connection member 40. Depending on the region of the terminal plate 30 being melted, the bonding portion 100 may cover an upper surface or side surface of the connection member 40, such that the shape of the bonding portion 100 may vary.

In FIGS. 9 to 11, the bonding portion 100 fills the gap between the connection member 40 and the terminal plate 30, and a portion thereof may cover the upper surface of the connection member 40.

Depending on what type of filler metal the bonding portion 100 is formed of, the shape may vary. The bonding portion 100 in FIGS. 9 and 10 is formed by projection 93 protruding from the terminal plate 30 or the melting member 95, such that the terminal plate 30 may not be melted by the heater 90.

In FIG. 11, the bonding portion 100 is formed by melting one region of the terminal plate 30, such that the region of the terminal plate 30 may be concave adjacent to the bonding portion 100.

The heater 90 may heat one region of the terminal plate 30 to a predetermined temperature set greater than or equal to the melting point of the first metal material and less than or equal to the melting point of the second metal material. A heating member 40 formed of the second metal material may not be melted by the heater 90.

As the bonding portion 100 is formed by one region of the terminal plate 30 being melted by the heater 90, the bonding portion 100 may include the first metal material but not the second metal material.

FIG. 12 is an illustration of a pin member 80 according to an embodiment of the present disclosure.

The fin member 80 may be bonded to the electrode assembly 60 and may have fins protruding in one direction.

The pin member 80 may be in a plate shape having a predetermined thickness with a pin protruding from the center and may be bonded with the connection member 40. Specifically, the pin member 80 may be bonded with a pinhole 45 formed in the connection member 40.

The pin member 80 may be formed of a material with a high electrical conductivity to be electrically connected with the electrode assembly 60. The pin member 80 may electrically connect the electrode assembly 60 and the connection member 40.

FIG. 13 illustrates a cross-sectional view of a pin member 80 bonded to a cover case 20, according to an embodiment of the present disclosure.

FIG. 13 shows the pin member 80 bonded to a pinhole 45 of the connection member 40. Viewed from the top, the terminal plate 30 and the connection member 40 may be bonded via a bonding portion 100.

The connection member 40 includes a pinhole 45 that penetrates through the center, which may penetrate the terminal plate 30, the support member 70, and the cover case 20.

The connection member 40 is supported by a sealing gasket 50 at the bottom, and the support member 70 and the sealing gasket 50 may be formed of a non-conductive material to limit the path of current migrating through the connection member 40.

The sealing gasket 50 may prevent current from migrating to the cover case 20. The connection member 40 includes a protrusion 43 having a cross-sectional area that is larger than the through-hole 25 and the communication hole 35, and the protrusion 43 may support the terminal plate 30.

The insulating plate 110 may be supported by the terminal plate 120 and the pin member 80, and may support the cover case 20.

The insulating plate 110 may be formed of a non-conductive material to limit the path of current transmitted through the terminal plate 120 and the fin member 80. The fin member 80 may serve as a collector 130 to transmit current from the electrode assembly 60 to the connection member 40.

In the battery cell 1, current may be transferred to the electrode assembly 60, the pin member 80, the terminal plate 120, the connection member 40, and the terminal plate 30.

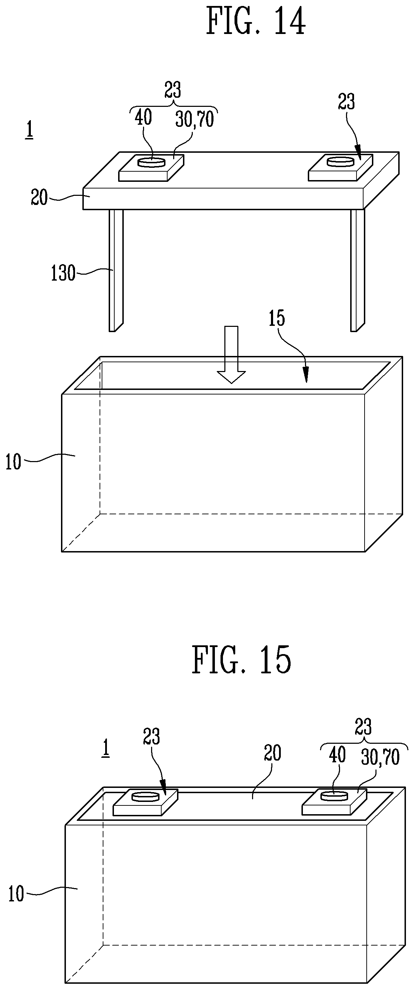

FIG. 14 illustrates a view in which a body case 10 and a cover case 20 are separated, according to another embodiment of the present disclosure, and FIG. 15 illustrates a view in which a body case 10 and a cover case 20 are bonded, according to another embodiment of the present disclosure.

The body case 10 may include an opening 15 on at least one surface, and in FIG. 14, the body case 10 may include an opening 15 on one surface. The body case 10 may form an internal space in the hexahedron shape, and the electrode assembly 60 may be introduced into the internal space through the surface.

The cover case 20 may correspond to the shape of the opening 15 and be bonded to the body case 10 at the opening 15 to close or cover the internal space. Through the bonding of the cover case 20, the electrode assembly 60 accommodated in the internal space may be closed off from the outside and electrically connected to the outside via the terminal unit 23.

The terminal unit 23 may be formed by protruding from the top of the cover case 20 and may include a terminal plate 30, a connection member 40, and a support member 70. The terminal plate 30 may be formed of a first metal material and include a through-hole 25. The connection member 40 may be formed of a second metal material and penetrate the through-hole 25.

The support member 70 is formed of a non-conductive material and may support the lower surface of the terminal plate 30. The connection member 40 may be disposed between the terminal plate 30 and the support member 70 and electrically connected to the electrode assembly 60.

The collector 130 may be accommodated in the body case 10 and electrically connected to the positive electrode or the negative electrode of the electrode assembly 60. The collector 130 may support the cover case 20, which is disposed on the upper surface in a generally curved shape.

The collector 130 may support the lower surface of the cover case 20 such that the cover case 20 is positioned in the opening 15, and may be formed of a material having an electrical conductivity to be electrically connected with the terminal unit 23.

The collector 130 is disposed between the cover case 20 and the electrode assembly 60, and may electrically connect the terminal unit 23 formed on the cover case 20 and the electrode assembly 60.

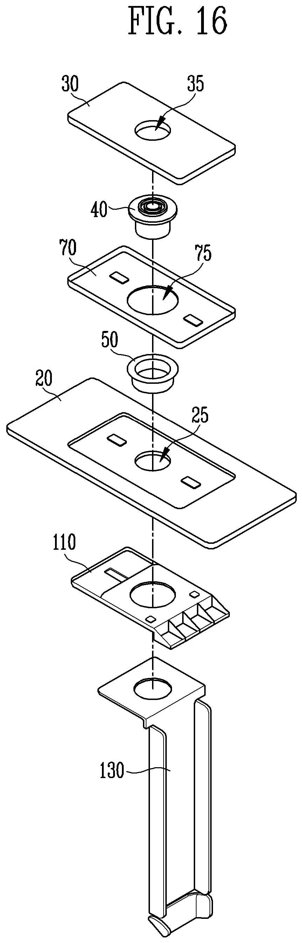

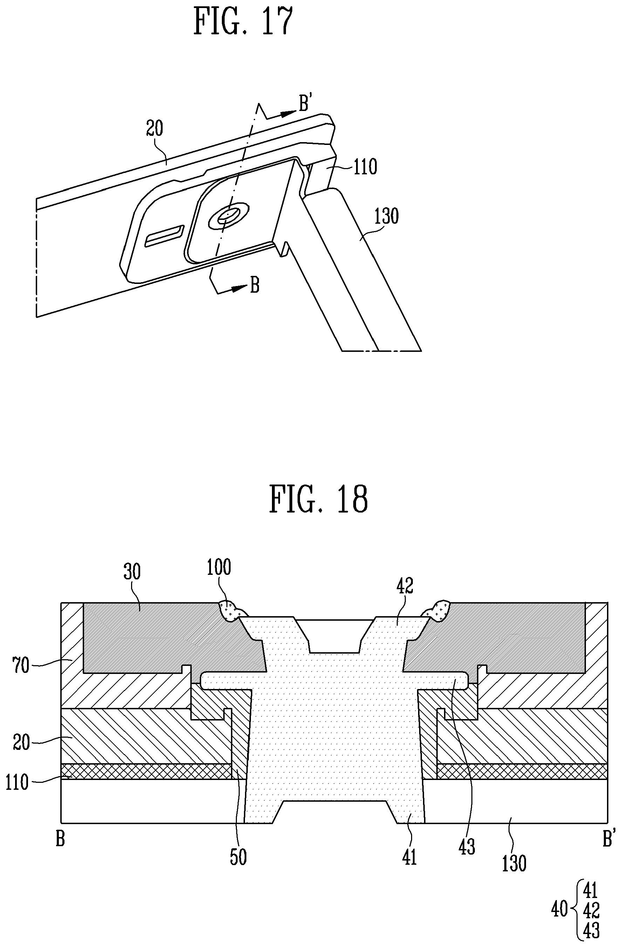

FIG. 16 illustrates a view in which a cover case 20 is separated, according to another embodiment of the present disclosure, and FIG. 17 illustrates a view in which a cover case 20 is bonded with a collector 130, according to another embodiment of the present disclosure.

Referring to FIG. 16, sequentially from top, a terminal plate 30, a connection member 40, a support member 70, a sealing gasket 50, a cover case 20, an insulating plate 110, and a collector 130 may be included. With respect to the cover case 20, the terminal plate 30, connection member 40, support member 70, and sealing gasket 50 may be bonded on the upper surface, and the insulating plate 110 may be bonded on the lower surface.

The terminal plate 30 may be formed of a first metal material and have the shape of a square plate. The terminal plate 30 may include a communication hole 35 in its center, and the communication hole 35 may communicate with the through-hole 25 formed in the cover case 20.

The connection member 40 may be formed of a second metal material and have a columnar shape. The connection member 40 may include protrusions 43 formed with different cross-sectional sizes at some heights, and the protrusions 43 may support the terminal plate 30.

The connection member 40 may be disposed to penetrate through the through-hole 25 of the cover case 20 and the communication hole 35 of the terminal plate 30 to connect the inside and outside of the cover case 20. In the connection member 40, with respect to the protrusion 43, the terminal plate 30 may be disposed on the upper portion and the cover case 20 on the lower portion.

The support member 70 may be formed with a relatively depressed inner surface such that the terminal plate 30 may be accommodated on the inner surface of the support member 70. A center of the support member 70 may be opened to be in communication with the communication hole 35 and the through-hole 25 such that the connection member 40 may penetrate through the center of the support member 70. The support member 70 may be formed of a material having a low electrical conductivity.

The sealing gasket 50 may be formed in a columnar shape with the center opened to accommodate the connection member 40 in the center. The sealing gasket 50 may serve to seal current migrating through the connection member 40 from escaping to the outside. The sealing gasket 50 may be formed of a material having a low electrical conductivity. For example, it may be formed of a plastic material.

The cover case 20 may be bonded to the opening 15 of the body case 10 to close or cover the opening 15.

In FIG. 16, the length of the cover case 20 is depicted to be short, but it may be formed in a size corresponding to the opening 15 of the body case 10. The cover case 20 may include a through-hole 25 and a depressed inner surface.

On the depressed inner surface of the cover case 20, a support member 70 may be placed to limit horizontal movement of the support member 70. The through-hole 25 of the cover case 20 may communicate with the communication hole 35 of the terminal plate 30, and the connection member 40 may penetrate through.

The insulating plate 110 may be provided on the lower surface of the cover case 20 and bonded to the cover case 20. The insulating plate 110 may be formed of a material having a low electrical conductivity. For example, it may be formed of a plastic material.

The insulating plate 110 may have the center opened, into which the connection member 40 may be inserted. The insulating plate 110 may prevent current from the electrode assembly 60 from being transmitted through the cover case 20, and may allow current from the electrode assembly 60 to be transmitted only through the connection member 40.

Referring to FIG. 16, the collector 130 may support the lower surface of the insulating plate 110 and be formed by bending. The collector 130 may be bent into an "L" shape, with one side supporting the insulating plate 110 and cover case 20 and the other side electrically connected to the electrode assembly 60.

One side of the collector may have the center opened and a connection member 40 may be bonded to the opened center. With respect to the protrusion 43, the connection member 40 may have an upper portion penetrating the terminal plate 30, and a lower portion penetrating the support member 70, the sealing gasket 50, the cover case 20, the insulating plate 110, and the collector 130.

In the collector 130, a plate may be formed of a material with a high electrical conductivity to serve as a path between the connection member 40 and the electrode assembly 60. The collector may be bonded to the connection member 40 on one side and electrically connected to the electrode assembly 60 on the other side, thereby transferring current from the electrode assembly 60 to the connection member 40.

FIG. 18 is a cross-sectional view in which a cover case 20 and a collector 130 are bonded, according to another embodiment of the present disclosure.

FIG. 18 illustrates a view in which the cover case 20 and the collector 130 are bonded. Viewed from the top, the terminal plate 30 and the connection member 40 may be bonded via the bonding portion 100. The connection member 40 may penetrate the terminal plate 30, the support member 70, and the cover case 20.

The connection member 40 may be supported at the bottom by a sealing gasket 50, and the support member 70 and the sealing gasket 50 may be formed of a non-conductive material to limit the path of current migrating through the connection member 40.

The sealing gasket 50 may prevent current from migrating into the cover case 20. The connection member 40 may include a protrusion 43 having a larger cross-sectional area or larger diameter than the through-hole 25 and the communication hole 35, and the protrusion 43 may support the terminal plate 30.

An insulating plate 110 may support the cover case 20 to be supported by a collector 130.

The insulating plate 110 may be formed of a non-conductive material to limit the path of current transmitted through the collector 130. The collector 130 may transmit current to the connection member 40, which is connected to the electrode assembly 60 on one side.

In the battery cell 1, current may be transmitted to the electrode assembly 60, the collector 130, the connection member 40, and the terminal plate 30.

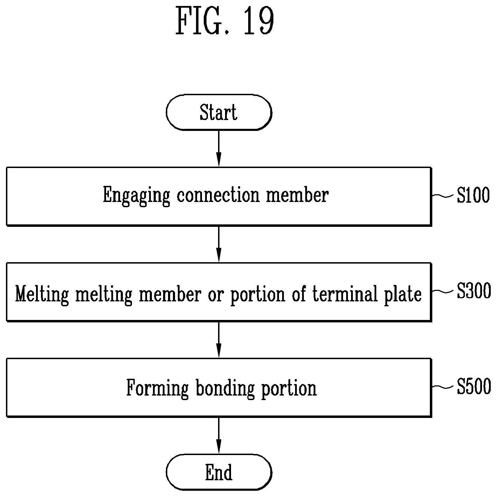

FIG. 19 is a flow chart illustrating a method of manufacturing a battery cell 1 according to another embodiment of the present disclosure.

A battery cell 1 according to the present disclosure includes a body case 10, a cover case 20, a terminal plate 30, and a connection member 40. The body case 10 may include an opening 15 on one surface, and an electrode assembly 60 may be accommodated therein through the opening 15.

A method of manufacturing a battery cell 1 according to another embodiment of the present disclosure may include engaging a connection member 40 to a through-hole 25 and a communication hole 35 S100; melting a melting member 95 or a portion of the terminal plate 30 at a predetermined temperature S300; and forming a bonding portion 100 that bonds the terminal plate 30 and the connection member 40 by melting the melting member 95 or the portion of the terminal plate 30 S500.

The engaging the connection member 40 in the through-hole 25 and the communication hole 35 S100 may enable engagement to the through-hole 25 formed in the cover case 20 and the communication hole 35 formed in the terminal plate 30 by penetrating the connection member 40.

The connection member 40 may be physically bonded and engaged in the through-hole 25 and the communication hole 35, and the connection member 40 may be bonded to protrude from the terminal plate 30.

In the melting the melting member 95 or a portion of the terminal plate 30 at a predetermined temperature S300, the melting member 95 or a portion of the terminal plate 30 may be melted at a predetermined temperature. The predetermined temperature may vary depending on the first metal material of the terminal plate 30 and the second metal material of the connection member 40.

In forming the bonding portion 100 by melting the melting member 95 or a portion of the terminal plate 30 to bond the terminal plate 30 and the connection member 40 S500, the bonding portion 100 may be formed by melting the melting member 95 or the terminal plate 30.

The melting member 95 may be disposed on the periphery of the communication hole 35, and the melted melting member 95 may be bonded with the connection member 40 to fill the gap between the terminal plate 30 and the connection member 40 to form the bonding portion 100.

The bonding portion 100 may be formed of the same single material as the melting member 95 or the terminal plate 30, and may not include the second metal material of the connection member 40.

The heater 90 may apply heat to the melting member 95 or terminal plate 30 for melting, contributing to formation of the bonding portion 100.

The heater 90 may be moved to selectively heat the melting member 95 or a portion of the terminal plate 30. The heater 90 may heat the melting member 95 or a portion of terminal plate 30 that are spaced apart from the connection member 40 to minimize heat damage and deformation of the connection member 40.

The heater 90 may selectively heat the melting member 95 or a portion of the terminal plate 30. The heated melting member 95 or terminal plate 30 may form a bonding portion 100.

Through selective heating, the heater 90 may prevent the formation of a melting member 95 or a bonding portion 100 in which a portion of the terminal plate 30 and the connection member 40 are mixed.

The melting member 95 may be formed of the same first metal material as the terminal plate 30.

The melting member 95 may not include the same second metal material as the connection member 40.

The projection 93 extending from the terminal plate 30 may be formed of a first metal material and disposed on the periphery of the communication hole 35. Thus, the projection 93 extending from the terminal plate 30 may correspond to a portion of the terminal plate 30.

The ring shape disposed on the terminal plate 30 may have a center opened, and the opened center may be wider than the communication hole 35. Thus, the ring shape disposed on the terminal plate 30 may correspond to the melting member 95.

The melting member 95 and a portion of the terminal plate 30 may be spaced apart from the connection member 40 and melted by the heater 90. The melted melting member 95 may be bonded with the connection member 40 along the periphery of the communication hole 35 to form a bonding portion 100.

Bonding with the connection member 40 at the bonding portion 100 does not refer to the intermetallic compound, but rather to a physical coupling where the melted melting member 95 or a portion of the terminal plate 30 comes in contact with the upper surface of the connection member 40, which is metal.

The connection member 40 and the bonding portion 100 may be physically bonded, but may not form a chemically bonded compound.

The predetermined temperature is set to be greater than or equal to the melting point of the first metal material and less than or equal to the melting point of the second metal material, such that only the first metal material may be melted. The heater 90 may selectively heat only the terminal plate 30 or the melting member 95 which is the first metal material to form the bonding portion 100.

The present disclosure has been described with respect to a single terminal unit 23, but may be applied to a plurality of terminal units 23 that may be formed in the battery cell 1.

The present disclosure is not limited to the embodiments described above, and may include combinations of the embodiments or combinations of at least any one of the above embodiments with known techniques as other embodiments.

While the present disclosure has been described in detail with specific embodiments, it is intended to illustrate the disclosure in detail and not to limit the disclosure, and it will be apparent that modifications and variations may be made by those with ordinary skill in the art within the technical ideas of the disclosure.

All mere alterations or modifications of the present disclosure fall within the scope of the present disclosure, the specific scope of protection of which will be made clear by the appended claims of the patent.

### [Explanation of symbols]

1: Battery cell
10: Body case
15: Opening
20: Cover case
25: Through-hole
30: Terminal plate
35: Communication hole
40: Connection member
60: Electrode assembly
70: Support member
100: bonding portion

## Claims

1. A battery cell comprising:
a body case including an opening on one surface and accommodating an electrode assembly therein through the opening;
a cover case bonded to the body case and covering the opening;
a through-hole penetrating through the cover case;
a terminal plate including a communication hole in communication with the through-hole, located outwardly of the cover case, and formed of a first metal material;
a connection member inserted through the through-hole and the communication hole to bond the cover case and the terminal plate, electrically connected with the electrode assembly, and formed of a second metal material; and
a bonding portion melted at a predetermined temperature to connect the connection member and the terminal plate along the periphery of the communication hole.

2. The battery cell according to claim 1, wherein the connection member penetrates the through-hole such that at least a portion thereof is exposed to the outside through the communication hole.

3. The battery cell according to claim 2, wherein a melting point of the second metal material is greater than a melting point of the first metal material.

4. The battery cell according to claim 3, wherein the predetermined temperature is set to be greater than or equal to the melting point of the first metal material and less than the melting point of the second metal material.

5. The battery cell according to claim 2, wherein the connection member includes:
a cylindrical body inserted into the communication hole and the through-hole;
a head exposed outwardly of the communication hole; and
a protrusion extending in a radial direction of the body between the body and the head and formed along a circumferential direction of the body.

6. The battery cell according to claim 5, wherein a diameter of the protrusion is greater than a diameter of the through-hole.

7. The battery cell according to claim 1, wherein the bonding portion is formed by melting one region of the terminal plate adjacent to the periphery of the communication hole at the predetermined temperature.

8. The battery cell according to claim 1, wherein the terminal plate includes a projection formed by protruding outwardly, and
wherein the bonding portion is formed by melting the projection at the predetermined temperature.

9. The battery cell according to claim 1, wherein the bonding portion is formed by melting the melting member at the predetermined temperature.

10. The battery cell according to claim 9, wherein the melting member is ring-shaped.

11. The battery cell according to claim 4, wherein the connection member includes a pinhole that penetrates through the connection member along a direction from the cover case toward the body case.

12. The battery cell according to claim 11, further comprising a pin member inserted into the pinhole.

13. The battery cell according to claim 9, further comprising a support member located between the cover case and the terminal plate to support the terminal plate and formed of an insulating material.

14. The battery cell according to any one of claims 7 to 9, wherein the bonding portion is formed of a single metal material, including the first metal material different from the second metal material.

15. The battery cell according to claim 14, wherein the bonding portion has at least a portion thereof covering some regions of the connection member adjacent to the periphery of the communication hole.

16. The battery cell according to claim 1, wherein the first metal material includes aluminum, and
wherein the second metal material includes copper.

17. The battery cell according to claim 1, wherein the connection member is a rivet.

18. A method of manufacturing a battery cell which includes: a body case including an opening on one surface and accommodating an electrode assembly therein through the opening; a cover case bonded to the body case and covering the opening; a through-hole penetrating through the cover case; a terminal plate including a communication hole in communication with the through-hole, located outwardly of the cover case, and formed of a first metal material; and a connection member inserted through the through-hole and the communication hole to bond the cover case and the terminal plate, electrically connected with the electrode assembly, and formed of a second metal material, the method comprising:
engaging the connection member to the through-hole and the communication hole;
melting the melting member or a portion of the terminal plate at a predetermined temperature; and
forming a bonding portion that bonds the terminal plate and the connection member by melting the melting member or the portion of the terminal plate.

19. The method according to claim 18, wherein, in the forming the bonding portion, a projection formed by protruding outwardly from the terminal plate is melted to form the bonding portion.

20. The method according to claim 18, wherein, in the forming the bonding portion, a portion disposed on the periphery of the communication hole in the terminal plate is melted to form the bonding portion.

21. The method according to claim 18, wherein, in the forming the bonding portion, a portion of the ring-shaped melting member is melted to form the bonding portion.

22. The method according to claim 18, wherein the melting includes heating the melting member or a portion of the terminal plate to a predetermined temperature using a heater.

23. The method according to claim 22, wherein the melting the melting member at a predetermined temperature further includes heating, by the heater, the melting member or a portion of the terminal plate to a predetermined temperature, the temperature being greater than or equal to the melting point of the first metal material and less than or equal to the melting point of the second metal material.
